## Europäisches Patentamt

## European Patent Office

## Office européen des brevets

(19)

(11) Veröffentlichungsnummer: **0 193 946**
A2

(12) # EUROPÄISCHE PATENTANMELDUNG

(21) Anmeldenummer: **86102908.0**

(22) Anmeldetag: **05.03.86**

(51) Int. Cl.⁴: **B 01 D 13/01**, F 28 F 21/06

(30) Priorität: **08.03.85 DE 3508382**

(43) Veröffentlichungstag der Anmeldung: **10.09.86**
**Patentblatt 86/37**

(84) Benannte Vertragsstaaten: **BE DE FR GB IT NL SE**

(71) Anmelder: **Akzo GmbH,**
**Postfach 10 01 49 Kasinostrasse 19-23,**
**D-5600 Wuppertal-1 (DE)**

(72) Erfinder: **Gemeinhardt, Hermann, Rosenstrasse 32,**
**D-8753 Obernburg (DE)**
Erfinder: **Trummer, Alfred, Dipl.-Ing., Bayernstrasse 38,**
**D-8750 Aschaffenburg (DE)**

(54) **Vorrichtung zur Wärme- und/oder Stoffübertragung mit Hilfe von Hohlfäden.**

(57) Vorrichtung zur Wärme- und/oder Stoffübertragung mit Hilfe von wenigstens drei Hohlfäden aus einem organischen Polymer, bei welcher die offenen Enden der Hohlfäden von je einem Rohrboden gehalten werden und bei welcher die offenen Enden der Hohlfäden freigelegt sind, so dass die Hohlfäden von einem Ende zum anderen Ende durchströmbar sind, dadurch gekennzeichnet, dass die Hohlfäden in Form wenigstens eines Vollgeflechtes angeordnet sind.

ACTORUM AG

- 1 -     A3GW32115

## Vorrichtung zur Wärme- und/oder Stoffübertragung mit Hilfe von Hohlfäden

A k z o    GmbH

Wuppertal

-.-.-.-.-

Die Neuerung betrifft eine Vorrichtung zur Wärme- und/oder Stoffübertragung von einem fluiden Stoff auf einen anderen fluiden Stoff mit Hilfe von wenigstens drei Hohlfäden aus einem organischen Polymer, bei welcher die Wärme- bzw. Stoffübertragung durch die Wandung der Hohlfäden erfolgt, bei welcher die offenen Enden der Hohlfäden von je einem Rohrboden gehalten werden, mit welchem sie fluiddicht verbunden sind, und bei welcher die offenen Enden der Hohlfäden freigelegt sind, so daß die Hohlfäden von einem Ende zum anderen Ende durchströmbar sind.

Vorrichtungen der einleitend genannten Art sind in unzähligen Ausführungsformen bekannt, wobei die Hohlfäden in gerader Form gegebenenfalls parallel zueinander liegend, in gewundener Form, beispielsweise als Spulkörper, in Form eines Gewebes, in Form eines ungeordneten Bündels oder in einer beliebig anderen geordneten oder ungeordneten Anordnung vorliegen können.

Bei der Konzeption einer Vorrichtung der hier vorliegenden
Art stellt sich immer wieder das Problem, einerseits eine
möglichst große Austauschfläche in einem möglichst kleinen
Volumen unterzubringen, andererseits ein gut und gleichmäßig durchströmbares Hohlfadengebilde zu schaffen, bei
welchem zudem ein Abdecken von Austauschfläche durch gegenseitiges Sich-Berühren der Hohlfäden vermieden oder zumindest auf ein unbedingt notwendiges Maß reduziert wird. Darüber
hinaus wird häufig versucht, durch entsprechende Formgebung
der Hohlfäden und/oder durch Einbauten, wie Umlenkbleche u.dgl.,
eine möglichst turbulente Strömung innerhalb und außerhalb der
Hohlfäden zu erzeugen, um die Ausbildung von Grenzschichten
in und an den Hohlfäden möglichst zu vermeiden und somit die
Wärme- bzw. Stoffübertragung zu verbessern.

Der vorliegenden Neuerung liegt die Aufgabe zugrunde, eine
gattungsgemäße Vorrichtung zur Verfügung zu stellen, die
allen diesen Anforderungen auf einfache Weise und in unerwartet
hohem Maße gerecht wird.

Diese Aufgabe wird neuerungsgemäß dadurch gelöst, daß die
Hohlfäden in Form wenigstens eines Vollgeflechtes angeordnet
sind.

Unter Vollgeflecht wird im Sinne der vorliegenden Neuerung
ein Hohlfadenbündel aus miteinander verflochtenen Hohlfäden
beliebiger Länge verstanden, das einen von Hohlfäden im
wesentlichen ausgefüllten Querschnitt hat. Neuerungsgemäß
wird darunter nicht ein sogenanntes Hohlgeflecht verstanden,
bei dem die Hohlfäden zu einem schlauch- oder rohrförmigen

A3GW32115

Gebilde miteinander verflochten sind, welche Gebilde
häufig fälschlicherweise auch als gewebte Schläuche bezeichnet werden.

Bei der neuerungsgemäßen Vorrichtung sind die Hohlfäden
vorzugsweise in Form wenigstens eines kordelförmigen Rundgeflechtes mit einem Querschnitt, der die Form eines gleichseitigen gleichmäßigen Vielecks mit mindestens drei Seiten aufweist, oder wenigstens eines bandförmigen Flachgeflechtes, also
eines Zopfes oder einer flachen Litze, angeordnet.

Bei der neuerungsgemäßen Vorrichtung können wenigstens drei Hohlfadenteilbündel aus wenigstens je zwei Hohlfäden zu einem
Vollgeflecht der zuvor beschriebenen Art verflochten sein.
Es hat sich jedoch gezeigt, daß im allgemeinen bessere Übertragungsleistungen dann erreicht werden, wenn die Hohlfäden
einzeln miteinander verflochten sind. Aus diesem Grunde weist
die neuerungsgemäße Vorrichtung vorzugsweise wenigstens ein
Hohlfadenbündel auf, bei dem drei, vier, fünf, aber auch mehr
Hohlfäden einzeln miteinander zu einem aus drei, vier, fünf
bzw. mehr Hohlfäden bestehenden Vollgeflecht miteinander verflochten sind.

Durch Zusammenfügen mehrerer solcher Hohlfadenvollgeflechte
lassen sich neuerungsgemäße Vorrichtungen beliebiger Größe,
also mit beliebig großer Übertragungsfläche, herstellen.

Wie bei gattungsgemäßen Vorrichtungen üblich, können die
Hohlfadenenden in die Rohrböden bildende Vergußmasseblöcke
eingegossen sein, sie können jedoch auch in vorgefertigten Rohrböden eingeklebt, eingeschweißt oder auf andere Art
und Weise mit diesen fluiddicht verbunden sein.

Zur Herstellung der neuerungsgemäßen Vorrichtung sind Hohlfäden geeignet, die wenigstens während des Verflechtens so
flexibel sind, daß sie dabei nicht brechen oder einknicken.
Je nach dem gewünschten Einsatzzweck können zur Herstellung
der neuerungsgemäßen Vorrichtung porenfreie, also nichtporöse, oder poröse Hohlfäden verwendet werden. Bekanntlich
kann eine Stoffübertragung auch mit porenfreien Membranen
durchgeführt werden, so beispielsweise bei der medizinischen
oder technischen Dialyse, der Umkehrosmose, der Pervaporation usw. Eine Stoffübertragung mit Hilfe von porösen Hohlfäden findet beispielsweise bei der Membrandestillation statt,
bei welcher aus einer die Poren der Hohlfäden nicht durchdringenden Flüssigkeit ein verdampfbarer Bestandteil durch die
Poren von der einen Seite zur gegenüberliegenden Seite
der Wandung der Hohlfäden hin verdampft. Im Rahmen der vorliegenden Neuerung wird unter Stoffübertragung aber auch Filtration, also beispielsweise Mikrofiltration, Ultrafiltration,
Cross-Flow-Mikrofiltration und andere, verstanden.

Die Wärmeübertragung kann dabei auch gleichzeitig mit der
Stoffübertragung, gegebenenfalls in entgegengesetzter Richtung
zu dieser, erfolgen. Eine Stoffübertragung kann auch gleichzeitig in beiden Richtungen stattfinden.

Unter fluiden Stoffen werden im Sinne der vorliegenden
Neuerung gasförmige, dampfförmige und flüssige Stoffe verstanden.

Das von den verflochtenen Hohlfäden gebildete Hohlfadenbündel weist bei der neuerungsgemäßen Vorrichtung vorzugsweise einen Füllgrad im Bereich von ca. 35% bis ca. 45% auf,
wobei der Füllgrad das Verhältnis der Summe der Querschnittsflächen aller Hohlfäden zu der Querschnittsfläche desjenigen
rohrförmigen Gehäuses ist, in welches das Hohlfadenbündel
ohne Gewaltanwendung gerade noch eingeschoben werden kann,
ausgedrückt in Prozent. Ein Füllgrad von beispielsweise 50%
bedeutet also, daß die Summe der Querschnittsflächen aller
Hohlfäden gerade halb so groß ist, wie die Querschnittsfläche eines die Hohlfäden gerade umgebenden Gehäuses,
was wiederum bedeutet, daß - bei einer sehr geringen Wandstärke der Hohlfäden - der gesamte Strömungsquerschnitt für
das durch die Hohlfäden strömende Fluid ungefähr genausogroß
ist wie der dem anderen, die Hohlfäden außen umströmenden,
Fluid zur Verfügung stehende Strömungsquerschnitt.

In einfachster Ausgestaltung können die Rohrböden der neuerungsgemäßen Vorrichtung in je einem Rohr oder Schlauch angeordnet und mit diesem fluiddicht verbunden sein, so daß
ein Fluid durch die Hohlfäden geleitet werden kann, während
die freiliegenden Teile der Hohlfäden von einem anderen
Fluid umströmt werden können. Zu diesem Zweck können die
freiliegenden Teile der Hohlfäden zumindest teilweise in
einem mit einem Fluid gefülltem oder durchströmten Behälter,
Raum od.dgl. angeordnet sein.

Wie ebenfalls allgemein üblich können die Hohlfäden und die
Rohrböden jedoch auch in einem die verflochtenen Hohlfäden
eng umschließenden Gehäuse mit Anschlüssen für das Zu- und
Abführen der beiden an der Wärme- und/oder Stoffübertragung beteiligten fluiden Stoffe angeordnet und die Rohrböden mit
dem Gehäuse fluiddicht verbunden sein.

Auch bei dieser Ausführungsform der neuerungsgemäßen Vorrichtung können beliebig viele Hohlfadenvollgeflechte zu einem
Hohlfadenbündel zusammengefaßt sein.

Die Herstellung der für die neuerungsgemäße Vorrichtung geeigneten Vollgeflechte kann von Hand erfolgen. Vorteilhafter
ist jedoch die maschinelle Herstellung, wobei das Verflechten
nach demselben Verfahrensprinzip erfolgt, wie es bei den zur
Herstellung von Kordeln und Litzen gebräuchlichen Flechtmaschinen, den sogenannten Klöppelmaschinen, üblich ist, indem
lediglich anstelle der Klöppel eine entsprechende Anzahl von
Hohlfadenvorlageeinheiten (Spulen, Kannen od.dgl.)eingesetzt
wird. Auf diese Weise können Hohlfadenvollgeflechte von sehr
großer Länge hergestellt werden, die dann in kürzere Einheiten gewünschter Länge unterteilt werden können. Mehrere solcher Vollgeflechteinheiten können dann zu einem größeren
Hohlfadenbündel zusammengefaßt werden. Dabei ist es möglich,
auch Einzelgeflechte mit unterschiedlicher Hohlfadenanzahl
zu einem größeren Hohlfadenbündel zu vereinen.

Die neuerungsgemäße Vorrichtung kann darüber hinaus für das
Zuführen und gegebenenfalls gleichmäßige Verteilen des die
Hohlfäden umströmenden Fluids ein mit wenigstens einer Öffnung
versehenes sogenanntes Kernrohr aufweisen, um welches herum
die Hohlfäden in Form mehrerer Vollgeflechte angeordnet
sind. Diese Anordnung bietet hinsichtlich ihrer Herstellung
erhebliche Vorteile gegenüber einer an sich bekannten Vorrichtung, bei welcher das Kernrohr selbst von Hohlfäden um-

flochten ist, bei dem die Hohlfäden also ein Hohlgeflecht
bilden.

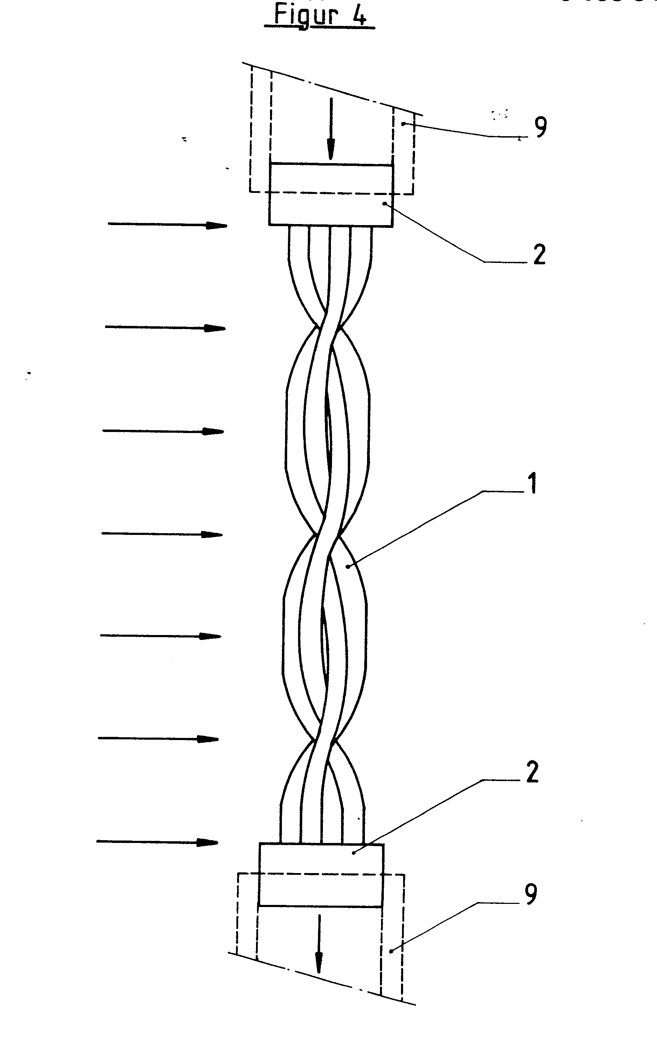

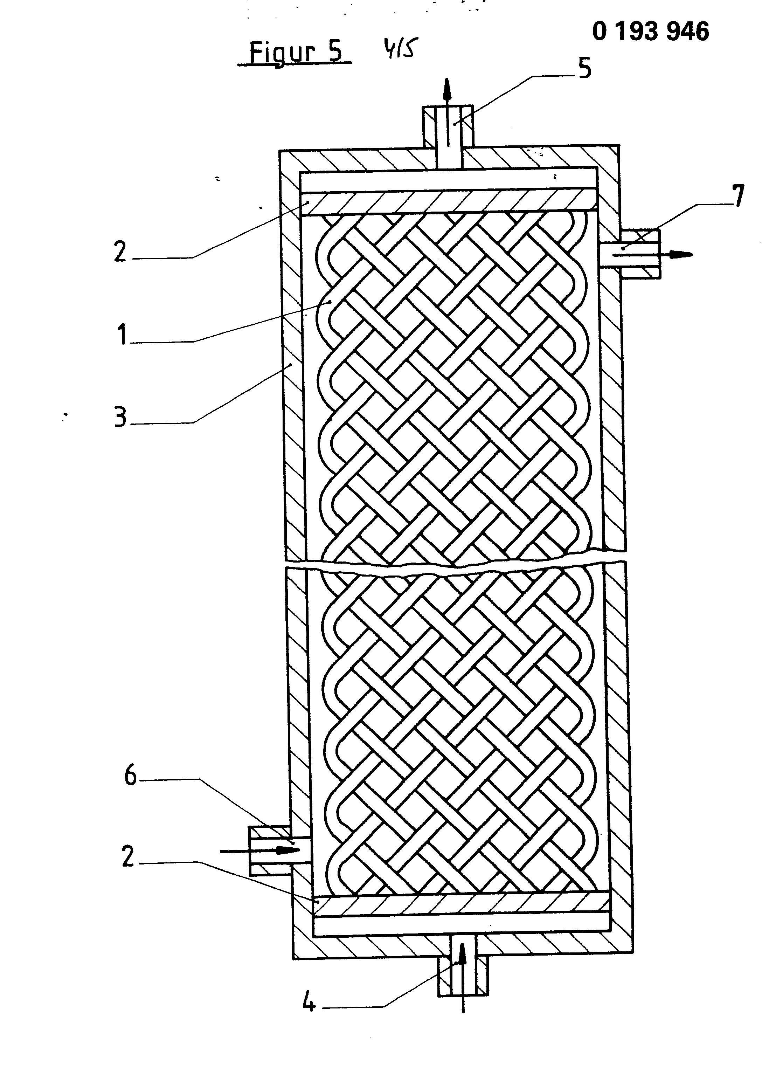

Die Verflechtung der Hohlfäden kann sehr locker sein, so daß
die Hohlfadenvollgeflechte entsprechend große Zwischenräume
zwischen den Hohlfäden aufweisen, was man auch als weitmaschig bezeichnen könnte, oder sie kann auch sehr fest sein,
so daß die Hohlfäden im Bündel sehr dicht gepackt sind, die
Bündel also kleine Durchlässe aufweisen. Auch die Kreuzungswinkel, die unmittelbar benachbarte Hohlfadenabschnitte
sich kreuzender Hohlfäden bilden, können - wie beispielsweise
ein Vergleich der Figuren 4 und 5 zeigt - unterschiedlich
groß sein.

- 8 -

A3GW32115

Die Neuerung wird nunmehr anhand der Figuren näher erläutert.
Es zeigen in vereinfachter schematischer nicht in jedem Fall
maßstäblicher Darstellungsweise:

Fig. 1 einen Teil einer Ausführungsform der neuerungsgemäßen
Vorrichtung,

Fig. 2 eine weitere Ausführungsform der neuerungsgemäßen
Vorrichtung,

Fig. 3 eine weitere Ausführungsform der neuerungsgemäßen
Vorrichtung in teilweise geschnittener Darstellungsweise,

Fig. 4 eine weitere Ausführungsform der neuerungsgemäßen
Vorrichtung,

Fig. 5 eine weitere Ausführungsform der neuerungsgemäßen
Vorrichtung in teilweise geschnittener Darstellungsweise,

Fig. 6 Ein Hohlfadenzopfgeflecht.

In den Figuren bezeichnen folgende Positionszahlen folgende
Teile:

| Positionszahl | Teil der Vorrichtung |
|---|---|
| 1 | Hohlfaden |
| 2 | Rohrboden |
| 3 | Gehäuse |
| 4 | Anschluß für das Zuführen des ersten Fluids |
| 5 | Anschluß für das Abführen des ersten Fluids |
| 6 | Anschluß für das Zuführen des zweiten Fluids |
| 7 | Anschluß für das Abführen des zweiten Fluids |
| 8 | Dichtung, Dichtring |
| 9 | Rohrleitung; Schlauch |

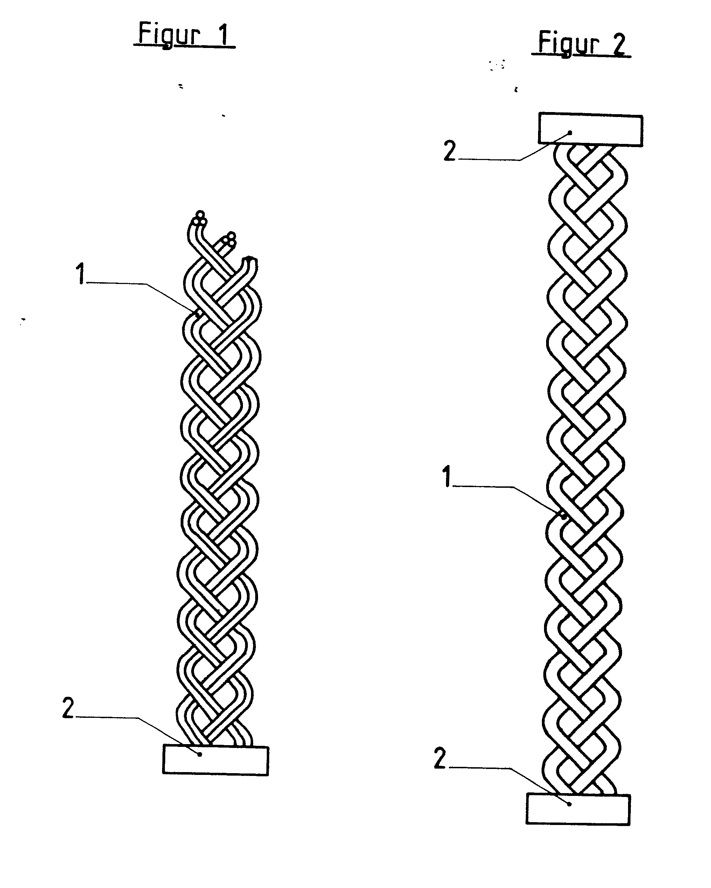

Bei dem in Fig. 1 dargestellten Teil einer Ausführungsform
der neuerungsgemäßen Vorrichtung sind drei Hohlfadenteilbündel bestehend aus je drei Hohlfäden 1, also insgesamt neun
Hohlfäden 1, zu einem zopfartigen Flachgeflecht miteinander
verflochten. Die offenen Hohlfadenenden sind fluiddicht mit
dem Rohrboden 2 verbunden, d.h. die Hohlfäden 1 münden ins
Freie. Der zweite Rohrboden für die anderen offenen, ins Freie
mündenden Enden der Hohlfäden 1 ist nicht dargestellt, um die
Anordnung und Anzahl neun der Hohlfäden 1 besser zeigen zu
können.

Bei der in Fig. 2 dargestellten Ausführungsform der neuerungsgemäßen Vorrichtung sind insgesamt drei Hohlfäden 1 einzeln
miteinander zu einem zopfartigen Flachgeflecht verflochten.
Bei dieser Ausführungsform sind beide Rohrböden 2 dargestellt,
deren Ausgestaltungsmöglichkeiten sich aus der obigen Beschreibung ergeben.

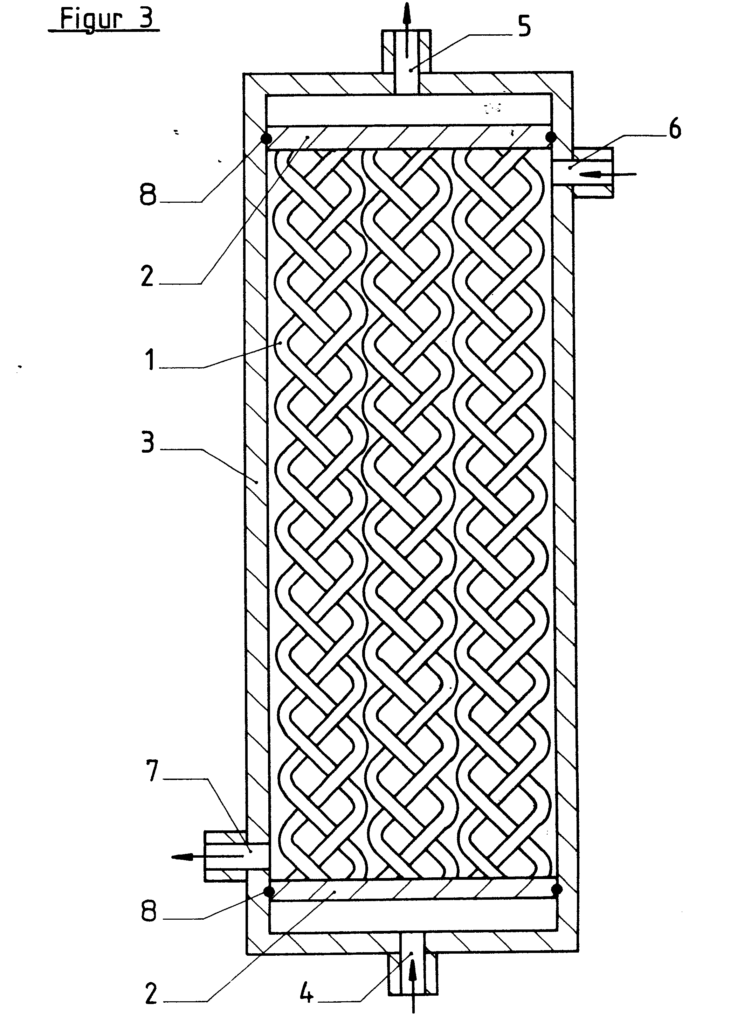

Bei der in Fig. 3 dargestellten Ausführungsform der neuerungsgemäßen Vorrichtung ist ein Hohlfadenbündel dargestellt, bei
dem insgesamt neun Hohlfäden 1 zu sehen sind, von denen je
drei einzeln miteinander zu einem zopfartigen Flachgeflecht
verflochten sind. Insgesamt sind also drei solcher zopfartigen
Hohlfadenflachgeflechte zu erkennen, deren offene Enden von
je einem gemeinsamen Rohrboden 2 gehalten werden, mit dem
die Enden der Hohlfäden 1 fluiddicht verbunden sind. Die Hohlfäden 1 und die Rohrböden 2 sind in einem Gehäuse 3 mit Anschlüssen 4; 5; 6; 7 für das Zu- und Abführen von zwei Fluiden
angeordnet. Die Rohrböden 2 sind mit Hilfe von Dichtringen 8
mit dem Gehäuse 3 fluiddicht verbunden. Das durch den Anschluß
4 eintretende Fluid strömt durch die Hohlfäden 1 und verläßt

A3GW32115

die Vorrichtung durch den Anschluß 5. Das andere Fluid tritt
durch den Anschluß 6 in die Vorrichtung ein, umströmt die
Hohlfäden 1 und verläßt die Vorrichtung durch den Anschluß 7.
Bei dieser Fahrweise strömen die beiden Fluide z.T. im Kreuz-
und z.T. im Gegenstrom zueinander.

Bei der in Fig. 4 dargestellten Ausführungsform der neuerungsgemäßen Vorrichtung sind vier Hohlfäden 1 zu einem kordelförmigen Rundgeflecht einzeln miteinander verflochten. Die offenen,
nach außen mündenden Enden der Hohlfäden 1 sind mit den beiden
Rohrböden 2 fluiddicht verbunden. Durch die gestrichelten
Linien soll verdeutlicht werden, daß die Rohrböden 2 der
neuerungsgemäßen Vorrichtung auf einfache Weise auch in einem
Schlauch 9 oder einem Rohr 9 fluiddicht angeordnet werden
können, so daß - wie durch die Pfeile angezeigt - ein Fluid
durch die Hohlfäden 1 hindurchgeleitet werden kann, während
mit einem anderen Fluid - wie ebenfalls durch Pfeile angedeutet - die Hohlfäden 1 von außen quer angeströmt, also umströmt werden können. Hierbei strömen beide Fluide also im
Kreuzstrom zueinander.

In Fig. 5 ist eine Ausführungsform der neuerungsgemäßen
Vorrichtung dargestellt, bei der die Hohlfäden 1 und die
Rohrböden 2 wiederum in einem Gehäuse 3 mit Anschlüssen
4; 5; 6; 7 für das Zu- und Abführen von zwei fluiden Stoffen
angeordnet sind, mit welchem die Rohrböden 2 fluiddicht verbunden sind. Die Anschlüsse 4; 5; 6; 7 sind hierbei so angeordnet, daß die beiden an der Wärme- bzw. Stoffübertragung
beteiligten Fluide z.T. im Kreuz- und z.T. im Gleichstrom
zueinander strömen. Bei dieser Ausführungsform sind jeweils
neun Hohlfäden 1 einzeln zu einem Flachgeflecht miteinander verflochten. Mehrere solche Flachgeflechte können dabei
- auch leicht versetzt zueinander - übereinandergestapelt
und deren offene Enden von insgesamt zwei gemeinsamen Rohrböden 2, mit denen sie fluiddicht verbunden sind, gehalten
sein.

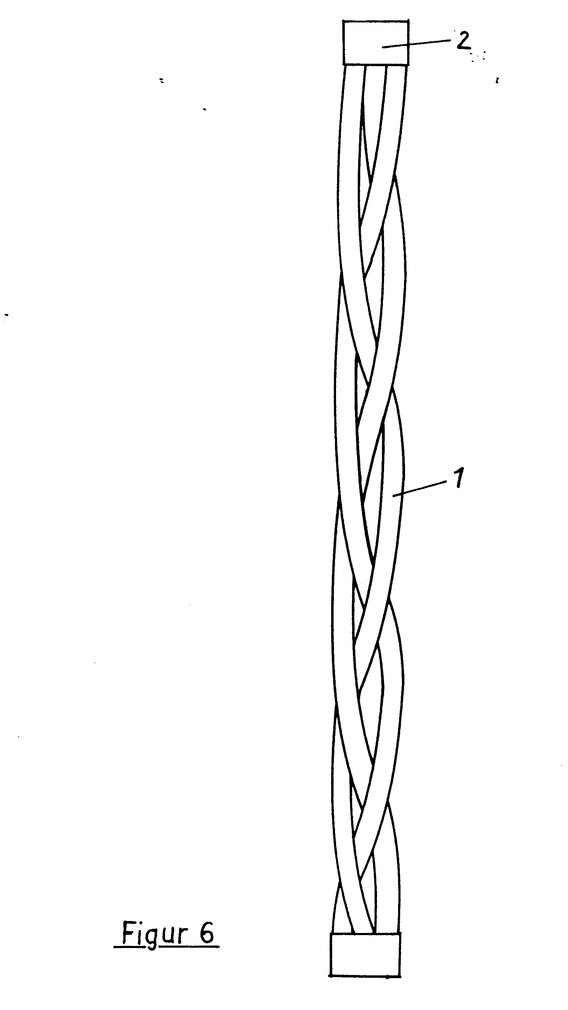

In Fig. 6 ist ein Zopfgeflecht dargestellt, bei dem insgesamt
drei Hohlfäden 1 einzeln miteinander verflochten sind. Im
Vergleich zu der in Fig. 2 dargestellten Ausführungsform
kreuzen sich hierbei die Hohlfäden 1 unter einem spitzen
Winkel. Diese Art der Verflechtung ist für Hohlfäden mit
einer etwas höheren Biegesteifigkeit, also mit einer geringeren Flexibilität, geeignet.

Beispiel:

Verglichen wurde die Stoffübertragungsleistung einer neuerungsgemäßen Vorrichtung mit einer Vorrichtung, bei der die
Hohlfäden parallel und in Abständen zueinander angeordnet
waren. Beide Vorrichtungen hatten insgesamt 216 poröse Hohlfäden aus Polypropylen mit einem Porenvolumen von 76%,
einem maximalen Porendurchmesser von 0,53 µm, einem Außendurchmesser von 2,6 mm und einem Innendurchmesser von 1,8 mm.
In der neuerungsgemäßen Vorrichtung waren jeweils drei
Hohlfäden zu einem zopfartigen Vollgeflecht einzeln miteinander verflochten, d.h. das Hohlfadenbündel wurde bei dieser
Ausführungsform also von 72 solchen zopfartigen Hohlfadenvollgeflechten gebildet. Die wirksame Länge der Hohlfäden
betrug bei der neuerungsgemäßen Vorrichtung 530 mm, bei der
herkömmlichen 620 mm, die Austauschfläche, bezogen auf den
Hohlfadeninnendurchmesser, betrug bei der neuerungsgemäßen
Vorrichtung ca. 0,65 m², bei der herkömmlichen ca. 0,76 m².
Jedes Hohlfadenbündel war in einem rohrförmigen Gehäuse
angeordnet, das einen Innendurchmesser von 60 mm hatte. Der
Füllgrad betrug somit in beiden Fällen ca. 40,6%.

Zum Vergleich wurden die bei der Transmembrandestillation
unter verschiedenen Versuchsbedingungen von der Destillandseite durch die Poren der Hohlfäden zur Destillatseite verdampften Wassermengen herangezogen. Als Ausgangsflüssigkeit
(Destilland)wurde eine 0,1%-ige NaCl-Lösung verwendet, die
durch die Hohlfäden geleitet wurde, wobei Durchsätze im
Bereich von 100 bis 750 l/h und Temperaturen im Bereich von
30 bis 90°C eingestellt wurden. Für den Destillatkreislauf
wurde reines Wasser verwendet, wobei jeweils die gleichen

- 13 -      A3GW32115

Durchsätze wie im Warmkreislauf (Destillandkreislauf) und
Temperaturen im Bereich von 15 bis 26°C eingestellt wurden.
Die Temperatur des Destillands wurde um 4°C bis 75°C höher
eingestellt als die des Destillatkreislaufes.

Während die mit der herkömmlichen Vorrichtung gewonnenen
Destillatmengen nur im Bereich von 1 bis 10 $1/m^2h$ lagen,
wurden mit der neuerungsgemäßen Vorrichtung Destillatmengen im
im Bereich von 2 bis 15 $1/m^2h$ erreicht. Das bedeutet, daß
mit der erfindungsgemäßen Vorrichtung eine um 50% bis 100%
höhere Stoffübertragungsleistung unter sonst gleichen Bedingungen erreicht wurde, wobei die relativ höheren Leistungswerte bei niedrigeren Durchsätzen und niedrigeren Temperaturen im Warmkreislauf bzw. niedrigeren Temperaturdifferenzen zwischen Destillandseite und Destillatseite erreicht
wurden.

A3GW32115

Schutzansprüche

1. Vorrichtung zur Wärme- und/oder Stoffübertragung von einem
   fluiden Stoff auf einen anderen fluiden Stoff mit Hilfe
   von wenigstens drei Hohlfäden aus einem organischen Polymer,
   bei welcher die Wärme- bzw. Stoffübertragung durch die
   Wandung der Hohlfäden erfolgt, bei welcher die offenen
   Enden der Hohlfäden von je einem Rohrboden gehalten werden,
   mit welchem sie fluiddicht verbunden sind, und bei welcher
   die offenen Enden der Hohlfäden freigelegt sind, so daß die
   Hohlfäden von einem Ende zum anderen Ende durchströmbar
   sind, dadurch gekennzeichnet, daß die Hohlfäden (1) in
   Form wenigstens eines Vollgeflechtes angeordnet sind.

2. Vorrichtung nach Anspruch 1, dadurch gekennzeichnet, daß
   die Hohlfäden (1) in Form wenigstens eines kordelförmigen
   Rundgeflechtes angeordnet sind.

3. Vorrichtung nach Anspruch 1, dadurch gekennzeichnet, daß
   die Hohlfäden (1) in Form wenigstens eines bandförmigen
   Flachgeflechtes angeordnet sind.

4. Vorrichtung nach Anspruch 1 bis 3, dadurch gekennzeichnet,
   daß die Hohlfäden (1) einzeln miteinander verflochten sind.

5. Vorrichtung nach Anspruch 1 bis 4, dadurch gekennzeichnet, daß die Hohlfäden (1) porös sind.

6. Vorrichtung nach Anspruch 1 bis 5, dadurch gekennzeichnet, daß die Hohlfäden (1) und die Rohrböden (2) in einem Gehäuse (3) mit Anschlüssen (4; 5; 6; 7) für das Zu- und Abführen der beiden fluiden Stoffe angeordnet sind, mit welchem die Rohrböden (2) fluiddicht verbunden sind.

7. Vorrichtung nach Anspruch 1 bis 6, dadurch gekennzeichnet, daß das von den verflochtenen Hohlfäden (1) gebildete Hohlfadenbündel einen Füllgrad im Bereich von 35% bis 45% aufweist.

Figur 1

Figur 2

Figur 3

2/5

0 193 946

315

Figur 4

0 193 946

Figur 5

0 193 946

2

1

Figur 6